Europäisches Patentamt

European Patent Office

Office européen des brevets

(19)

(11) Veröffentlichungsnummer: **0 062 361**
**B1**

(12)

# EUROPÄISCHE PATENTSCHRIFT

(45) Veröffentlichungstag der Patentschrift:
**14.08.85**

(21) Anmeldenummer: **82104588.7**

(22) Anmeldetag: **06.03.80**

(60) Veröffentlichungsnummer der früheren Anmeldung
nach Art. 76 EPÜ:

(51) Int. Cl.⁴: **A 01 G  9/22,** B 65 D  33/16

(54) **Befestigungs- und Führungsmittel für Folienbahnen.**

(30) Priorität: **30.10.79  DE 2943743**

(43) Veröffentlichungstag der Anmeldung:
**13.10.82 Patentblatt 82/41**

(45) Bekanntmachung des Hinweises auf die Patenterteilung:
**14.08.85 Patentblatt 85/33**

(84) Benannte Vertragsstaaten:
**DE NL**

(56) Entgegenhaltungen:
**DE - A - 2 805 848**
**US - A - 3 727 829**

(73) Patentinhaber: **Felix Heescher Gesellschaft mit beschränkter Haftung, Rodder Strasse 31, D-4446 Hörstel-Bevergern (DE)**

(72) Erfinder: **Heescher, Felix, Rodder Strasse 31, D-4460 Hörstel-Bevergern (DE)**
Erfinder: **Caroe, Claus J., Kirsebaerbakken 8, DK-3070 Snekkersten (DK)**

(74) Vertreter: **Habbel, Hans-Georg, Dipl.-Ing., Postfach 3429 Am Kanonengraben 11, D-4400 Münster (DE)**

ACTORUM AG

## Beschreibung

Die Erfindung bezieht sich auf ein Befestigungs- und Führungsmittel für Folienbahnen, z.B. für als Isolierung oder Schattierung in Gewächshäusern od. dgl. dienende, an oberen Faltbereichen beweglich aufhängbare Folienbahnen, das ein Hakenbauteil mit einem Traghaken und einen als Steckbauteil mit einer Steckplatte mit durch die Folienbahn durchdrückbaren Steckern und einer Lochplatte ausgebildeten Hakenfuss aufweist.

Aus dem auf die Anmelderin zurückgehenden Firmenprospekt «Heescher Gewächshaustechnik 78/79», Seite 24, ist ein den Gattungsbegriff bildender Aufhänger bekannt, der aus Kunststoff besteht. Die Stecker der Steckplatte sind dabei mit ihren Achsen in der Ebene des Hakens ausgerichtet und die Lochplatte weist entsprechend ausgebildete Aufnahmeöffnungen auf, wobei die Lochplatte unabhängig vom Haken und der Steckplatte ist. Die Festlegung dieses Befestigungs- und Führungsmittels erfolgt quer zur Haupterstreckungsebene der zu halternden Folienbahn, d.h. die Steckplatte mit den Haken befindet sich auf der einen Seite der Folienbahn und die Lochplatte auf der anderen. Die Aufeinanderzuführung und damit Verbindung der beiden Bauteile wird dadurch erheblich erschwert. Dadurch, dass die Lochplatte unabhängig von der Steckplatte ist, kann diese leicht verlorengehen. Die Zentrierung der Lochplatte, um die Stecker der Steckplatte in diese einzusetzen, erfordert erhebliche Aufmerksamkeit.

Aus der DE-A-28 05 848 ist ebenfalls ein Befestigungs- und Führungsmittel für Folienbahnen bekanntgeworden, das aus einem mit Öse und Nietansatz versehenen Clipoberteil und einem Clipunterteil besteht. Das Clipunterteil wird vom Nietansatz des Clipoberteils unter Einschluss der Folie durchgriffen. Bei dieser bekannten Anordnung sind keine Haken vorgesehen, sondern Ösen, die das Auffädeln der vielen Befestigungs- und Führungsmittel auf dem zugeordneten Tragseil schwierig gestalten. Auch hier ist das Anbringen des Befestigungs- und Führungsmittels schwierig, da von beiden Seiten der häufig sehr grossflächigen Folienbahn gearbeitet werden muss.

Aus der DE-A-19 13 250 ist ein Beschlag zum Verankern von Befestigungsmitteln an einer verformbaren Materialbahn bekannt, der zweiteilig ausgebildet ist. An der Lochplatte ist eine Öse zum Aufhängen ausgeformt. Bei dieser Anordnung erstrecken sich die Achsen des Steckers und des Loches der Lochplatte senkrecht zur Längsebene der Öse. Durch die zweiteilige, voneinander unabhängige Ausbildung der beiden Bauteile ist auch die Handhabung dieser Vorrichtung schwierig und erfordert grosse Aufmerksamkeit.

Schliesslich ist aus der US-A-37 27 829 eine Verschlussvorrichtung für Plastikbeutel bekanntgeworden, die mit einer Steckplatte und einer Lochplatte versehen ist, wobei beide Bauteile über Verbindungsbügel miteinander verbindbar sind. An der Steckplatte ist eine Aufhängevorrichtung angeordnet. Bei dieser bekannten Anordnung wird keine Folie zwischen die beiden miteinander zu verbindenden Platten eingeklemmt, sondern die Stecker dienen lediglich zur Festlegung der mit den Löchern ausgerüsteten Lochplatte, wenn diese über die Steckplatte gebogen wird. Die Aufhängevorrichtung dient lediglich zur Stapelung und griffbereiten Aufbewahrung der so ausgerüsteten Folienbeutel.

Der Erfindung liegt demgegenüber die Aufgabe zugrunde, ein Befestigungs- und Führungsmittel zu schaffen, das möglichst einfach hergestellt werden kann, aus einem die festzulegende Folienbahn möglichst grossflächig festlegenden Bereich besteht, bei seiner Handhabung möglichst wenig Aufmerksamkeit erfordert und gleichzeitig beim Einsatz die eigentliche Aufhängevorrichtung zur Verfügung stellt.

Diese der Erfindung zugrundeliegende Aufgabe wird dadurch gelöst, dass die Steckplatte über umbiegbare Verbindungsbügel mit der Lochplatte verbunden ist und jeder Verbindungsbügel mittig einen Schwächungsbereich aufweist, wobei die Achsen jedes Steckers der Steckplatte und jedes Loches der Lochplatte senkrecht zu der Längsebene des Traghakens gerichtet sind und dass im nicht zusammengesteckten Zustand Lochplatte, Steckplatte und Verbindungsbügel einen offenen Rahmen bilden, der den Haken umgibt.

Durch diese Anordnung wird ein Befestigungs- und Führungsmittel geschaffen, das schon bei der Herstellung einteilig ausgebildet ist, so dass bei der Herstellung nicht eine Sortierung und Zuordnung verschiedener Teile erfolgen muss. Durch die Ausrichtung der Achsen der Stecker und Löcher wird erreicht, dass der Haken über eine quer zur Ebene der zu halternden Folie ausgerichteten Führung eingehängt werden kann. Durch den Einsatz der beiden Verbindungsbügel mit dem zugeordneten Schwächungsbereich wird erreicht, dass durch einfaches Umbiegen der Lochplatte gegenüber der Steckplatte ein gerichtetes Führen der Stecker in die Löcher erfolgt, so dass beim Anbringen der Befestigungs- und Führungsmittel keine besondere Aufmerksamkeit zur sicheren Verankerung von Steckplatte und Lochplatte erforderlich ist.

Weiterhin ist vorgesehen, dass an dem Haken Befestigungsknöpfe zum Anschluss von Zug- und Distanzmittel angeordnet sind.

Die Ausbildung der zu halternden Isolierungsfolie ist nicht Gegenstand dieses Schutzrechtes, sondern Gegenstand des Europäischen Patents 00 28 282.

Ein Ausführungsbeispiel der Erfindung wird nachfolgend anhand der Zeichnungen erläutert. Die Zeichnungen zeigen dabei in

Fig. 1 ein Befestigungs- und Führungsmittel im Ausgangszustand, in

Fig. 2 das Befestigungs- und Führungsmittel gemäss Fig. 1 in der Einsatzstellung (ohne zwischengeschaltete Folie), in

Fig. 3 einen Schnitt gemäss der Linie 3–3 in Fig. 1 und in

Fig. 4 einen Schnitt gemäss der Linie 4–4 in Fig. 1.

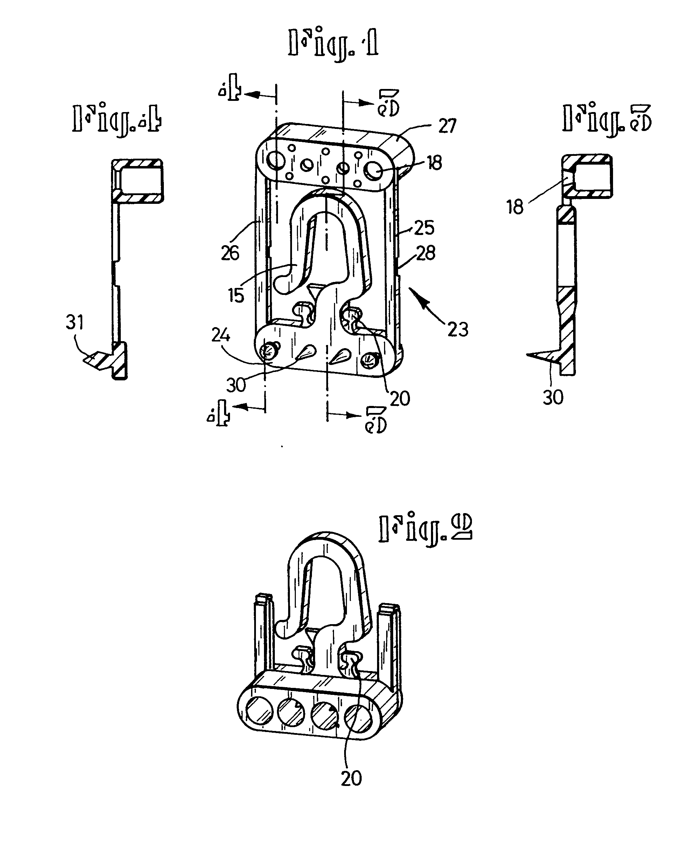

In Fig. 1 ist ein Befestigungs- und Führungsmittel mit 23 bezeichnet, das einen offenen Haken 15 und am Hakenfuss eine Steckplatte 24 mit Steckern 30 aufweist. Verbindungsbügel 25 und 26 verbinden die Steckplatte 24 mit einer Lochplatte 27. Mit den Steckern 30 arbeiten die in der Lochplatte 27 vorgesehenen Löcher 18 zusammen. In der Mitte der Verbindungsbügel 25 und 26 ist je ein Schwächungsbereich 28 vorgesehen, der ein leichtes Umbiegen der Lochplatte 27 und damit ein gerichtetes Führen der Stecker 30 in die Löcher 18 ermöglicht. Beim Umbiegen der Lochplatte 27 fluchten die Löcher 18 der Lochplatte 27 mit den Steckern 30 der Steckplatte 24, so dass dann ein Festklemmen der – in der Zeichnung nicht dargestellten – Folienbahn erfolgen kann. Ein Verlieren der Steckplatte 24 oder der Lochplatte 27 ist aufgrund des Einsatzes der Verbindungsbügel 25 und 26 nicht möglich.

Der Haken 15 ist mit Befestigungsknöpfen 20 ausgerüstet, die zum Anschluss an ein Zug- und Distanzmittel dienen. Mit dem Zug- und Distanzmittel kann das Auf- und Zuziehen der Folienbahn erfolgen.

Wie die Schnittzeichnung in Fig. 3 und 4 zeigt, sind die Stecker 30 spitz zulaufend ausgebildet und insbesondere der oder die Stecker 31 sind so gestaltet, dass ein Verrasten der Steckplatte 24 an der Lochplatte 27 erfolgt, so dass dadurch durch entsprechende Grössenwahl der Rastbauteile, ein festes Anklemmen der Platten aneinander erreicht wird. Die zwischen der Lochplatte 27 und der Steckplatte 24 eingeschlossene, von den Steckern 30 durchquerte Folie wird fest eingeklemmt und damit der Aufhängedruck der Folie über den ganzen Klemmbereich verteilt und die durch die Stecker 30 geschaffenen Bohrungen in der Folie werden entlastet.

## Patentansprüche

1. Befestigungs- und Führungsmittel für Folienbahnen, z.B. für als Isolierung oder Schattierung in Gewächshäusern od.dgl. dienende, an oberen Faltbereichen beweglich aufhängbare Folienbahnen, das ein Hakenbauteil mit einem Traghaken (23) und einen als Steckbauteil mit einer Steckplatte (24) mit durch die Folienbahn durchdrückbaren Steckern (30) und einer Lochplatte (27) ausgebildeten Hakenfuss aufweist, dadurch gekennzeichnet, dass die Steckplatte (24) über umbiegbare Verbindungsbügel (25, 26) mit der Lochplatte (27) verbunden ist und jeder Verbindungsbügel (25, 26) mittig einen Schwächungsbereich (28) aufweist, wobei die Achsen jedes Steckers (30) der Steckplatte (24) und jedes Loches (18) der Lochplatte (27) senkrecht zu der Längsebene des Traghakens (23) gerichtet sind und dass im nicht zusammengesteckten Zustand Lochplatte (27), Steckplatte (24) und Verbindungsbügel (25, 26 einen offenen Rahmen bilden, der den Haken umgibt.

2. Befestigungs-und Führungsmittel nach Anspruch 1, gekennzeichnet durch Befestigungsknöpfe (20) an den Haken (23) zum Anschluss von Zug- und Distanzmitteln.

## Revendications

1. Dispositif de fixation et de guidage pour bandes de matière en feuille, par exemple, pour bandes de matière en feuille pouvant être suspendues mobiles dans les régions supérieures des plis, et qui servent, par exemple, à l'isolement ou à l'ombrage dans des serres ou équivalents, ce dispositif comprenant une partie formant crochet, qui comprend un crochet porteur (23), et un pied de crochet, réalisé sous la forme d'une plaque à chevilles, qui comprend une plaque à chevilles 24 portant des chevilles (30) qu'on peut enfoncer à travers la bande de matière en feuille et une plaque perforée (27), caractérisé en ce que la plaque à chevilles (24) est reliée à la plaque perforée (27) par l'intermédiaire d'arceaux de liaison (25, 26) et que chaque arceau de liaison (25, 26) présente une région d'affaiblissement (28) en son milieu, les axes de chaque cheville (30) de la plaque à chevilles (24) et de chaque trou (18) de la plaque perforée (27) étant dirigés perpendiculairement au plan longitudinal du crochet porteur (23) et en ce que, dans l'état non assemblé, la plaque perforée (27), la plaque à chevilles (24) et les arceaux de liaison (25, 26) forment un cadre ouvert qui entoure le crochet.

2. Dispositif de fixation et de guidage selon la revendication 1, caractérisé par des boutons de fixation (20) prévus sur le crochet (23) et servant à raccorder des moyens de traction et d'écartement (21).

## Claims

1. Fixing and guide means for film webs, for example for film webs serving as insulation or shading in greenhouses or the like and movably suspendable from upper folded zones, which means possesss a hook unit having a carrier hook (23) and a hook base constructed as a pinning unit having a pinning plate (24) possessing pins (30) which can be pressed through the film web and a hole plate (27), characterised in that the pin plate (24) is connected to the hole plate (27) via connecting straps (25, 26) which can be bent over and that each connecting strap (25, 26) centrally possesses a weakened zone (28), the axes of each pin (30) of the pin (24) and each hole (18) of the hole plate (27) running at right-angles to the lengthwise plane of the carrier hook (23), and that in the non-assembled state the hole plate (27), pin plate (24) and connecting strap (25, 26) form an open frame which surrounds the hook.

2. Fixing and guide means according to Claim 1, characterised by fixing-knobs (20) on the hooks (23), for attachment of pulling means and spacers (21).

0 062 361

Fig. 1

27
18
25
28
26
15
24
23
30
20

Fig. 4

31
30

Fig. 3

18
30

Fig. 2

20